# EUROPÄISCHE PATENTSCHRIFT

(11) **EP 1 135 427 B1**
(45) Veröffentlichungstag und Bekanntmachung des Hinweises auf die Patenterteilung: **26.02.2003**
(21) Anmeldenummer: 99963337.3
(22) Anmeldetag: 26.11.1999
(51) Int. Cl.: C08G 73/02, D21H 17/55, D21H 21/20

(54) **VERFAHREN ZUR HERSTELLUNG VON VERNETZTEN KATIONPOLYMEREN MIT VERMINDERTEM AOX-GEHALT**
METHOD FOR PRODUCING CROSS-LINKED CATION POLYMERS WITH A REDUCED AOX CONTENT
PROCEDE POUR PREPARER DES POLYMERES CATIONIQUES RETICULES A TENEUR REDUITE EN AOX

(30) Priorität: 05.12.1998 DE 19856212
(43) Veröffentlichungstag der Anmeldung: 26.09.2001
(73) Patentinhaber: Cognis Deutschland GmbH & Co. KG, 40589 Düsseldorf (DE)
(72) Erfinder: BIGORRA LLOSAS, Joaquin, 08203 Sabadell (ES); PINILLA, Jose-Antonio, 08030 Barcelona (ES); PI SUBIRANA, Rafael, 08400 Granollers (ES)
(86) Internationale Anmeldenummer: EP9909224
(87) Internationale Veröffentlichungsnummer: WO00034358

(56) Entgegenhaltungen:
- WO-A-92/22601
- US-A- 5 614 597
- US-A- 5 643 430

## Beschreibung

### Gebiet der Erfindung

Die Erfindung befindet sich auf dem Papiersektor und betrifft ein Verfahren zur Herstellung von sogenannten Wet Strength Resins, die sich gegenüber dem Stand der Technik durch einen deutlich verminderten AOX-Gehalt auszeichnen.

### Stand der Technik

Unter dem Oberbegriff "Papier" werden ca. 3000 verschiedene Sorten und Artikel verstanden, die sich in ihren Anwendungsgebieten und ihrer Beschaffenheit zum Teil erheblich unterscheiden können. Zu ihrer Herstellung werden wäßrige, etwa 1 bis 5 Gew.-%ige Aufschlämmungen von Cellulosefasem in dünnen Schichten auf Bänder aufgebracht, auf denen sie bei ganz erheblichen Laufgeschwindigkeiten und unter Anwendung von Wärme und mechanischem Druck bis zu einem Feststoffgehalt von etwa 40 Gew.-% entwässert werden. Während das noch feuchte Rohpapier in weiteren Schritten getrocknet wird, kehrt das abgepreßte Wasser in den Kreislauf zurück.

In modemen Papiermühlen wird aus ökonomischen und ökologischen Gründen Wert darauf gelegt, den Wasserkreislauf weitgehend geschlossen zu halten. Hierzu ist es natürlich erforderlich, daß das Prozeßwasser möglichst unbelastet von Abfallstoffen ist bzw. sich nur solche Abfallstoffe anreichem, deren Weiterverwendung unproblematisch ist. Ein besonderes Augenmerk liegt dabei auf dem soge-nannten AOX-Gehalt des Prozeßwassers, d.h. dem Gehalt an unerwünschten Halogenverbindungen. Im Rahmen der Papierherstellung ist der Zusatz einer Vielzahl von Additiven jedoch unumgänglich. Hierzu gehören beispielsweise Füllstoffe, Entschäumer, Farbstoffe, Retentionsmittel sowie Hilfsstoffe, die die mechanische Zugbelastbarkeit des Papiers verbessem und - je nach Anwendungsbereich - als "Dry" oder "Wet Strength Resins" bezeichnet werden. Da sich die Additive im Laufe der Zeit zusammen mit Cellulosefasem im Prozeßwasser anreichem, besteht ein erhebliches Bedürfnis nach Produkten, die aus ökologischer Sicht möglichst unbedenklich sind.
Zu den Additiven, die in diesem Zusammenhang kritisch gesehen werden, zählen insbesondere die Wet Strength Resins, bei denen es sich in der Regel um vemetzte Polyaminoamide handelt. Zur Herstellung dieser Stoffe, die auch unter dem Handelsnamen Fibrabones® bekannt sind, geht man von Polyaminoamiden aus, deren Ketten unter Einsatz von Epichlorhydrin über Stickstoffatome vemetzt werden. Aus dem umfangreichen Stand der Technik sei in diesem Zusammenhang auf die US-Patentschriften **US 5,116,887, US 5,120,773, US 5,239,047** und **US 5,350,796** (Henkel Corp.) sowie auf die Europäische Patentanmeldung **EP 0553575 A1** (Hercules) verwiesen. Es hat sich dabei erwiesen, daß zwischen dem Vemetzungsgrad der Wet Strength Resins und der Verbesserung der Zugbelastbarkeit des damit behandelten Papiers ein direkter Zusammenhang besteht. Aus dieser Sicht ist es empfehlenswert, möglichst alle für eine Verknüpfung zur Verfügung stehenden Stickstoffgruppen im Polyaminoamid über Epichlorhydrineinheiten zu vernetzen. Andererseits führt die Umsetzung jeder Stickstoffgruppe mit Epichlorhydrin zur Abspaltung von Chlorwasserstoff, der als Addukt gebunden bleibt oder mit dem Epichlorhydrin abreagiert, und somit zu einer AOX-Belastung des Produktes führt, was aus den oben geschilderten Gründen außerordentlich unerwünscht ist. Demzufolge versucht man bislang die beiden gegenläufigen Parameter - Vemetzungsgrad und AOX-Belastung - in der Balance zu halten. Tatsächlich aber sind die Ergebnisse unbefriedigend, da in vielen Fällen weder die anwendungstechnischen Eigenschaften vollauf zufriedenstellend sind noch eine ausreichende ökologische Verträglichkeit der Produkte erreicht werden kann.

Demzufolge hat die Aufgabe der vorliegenden Erfindung darin bestanden, vemetzte Kationpolymere zur Verfügung zu stellen, die sich gleichzeitig durch ausgezeichnete anwendungstechnische Eigenschaften und geringen AOX-Gehalt auszeichnen.

### Beschreibung der Erfindung

Gegenstand der Erfindung ist ein Verfahren zur Hersteilung von vemetzten Kationpolymeren mit vermindertem AOX-Gehalt, welches sich dadurch auszeichnet, daß man wäßrige Lösungen von epichlorhydrinvemetzten Polyamidoaminen einer Ultrafiltration unterwirft.

Es wurde gefunden, daß sich Kationpolymere durch Ultrafiltration reinigen lassen und der AOX-Gehalt auf diesem Wege signifikant vermindert werden kann. Damit ist es nunmehr möglich, hochvernetzte Wet Strength Resins mit vergleichsweise hohem AOX-Gehalt, jedoch ausgezeichneten anwendungstechnischen Eigenschaften herzustellen und diese dann in einem nachgeschalteten Membranverfahren einfach und effektiv aufzureinigen.

### Epichlorhydrinvernetzte Polyamidoamine

Die im Sinne des erfindungsgemäßen Verfahrens einzusetzenden epichlorhydrinvemetzten Polyamido-amine stellen bekannte Stoffe dar, in einer bevorzugten Ausführungsform der Erfindung werden Polymere eingesetzt, die man nach einem der beiden folgenden Verfahren erhält:
1. Polyaminoamide werden (a) zunächst mit einer Menge von 5 bis 30 Mol-% - bezogen auf den zur Quatemierung zur Verfügung stehenden Stickstoff - eines Quaternierungsmittels umgesetzt, und (b) anschließend die resultierenden quatemierten Polyaminoamide mit einer dem Gehalt an nicht quatemiertem Stickstoff entsprechenden molaren Menge Epichlorhydrin vernetzt, oder
2. Polyaminoamide werden (a) zunächst bei 10 bis 35°C mit einer Menge von 5 bis 40 Mol-% - bezogen auf den für die Vernetzung zur Verfügung stehenden Stickstoff - Epichlorhydrin umgesetzt, und (b) das Zwischenprodukt auf einen pH-Wert im Bereich von 8 bis 11 einstellt und bei einer Temperatur im Bereich von 20 bis 45°C mit einer weiteren Menge Epichiorhydrin vemetzt, so daß das molare Einsatzverhältnis in Summe 90 bis 125 Mol-% - bezogen auf den für die Vemetzung zur Verfügung stehenden Stickstoff - beträgt.

Bei den für die Herstellung als Ausgangsstoffe in Frage kommenden Polyaminoamiden handelt es sich vorzugsweise um handelsübliche Polykondensationsprodukte, die sich von Dicarbonsäuren der Formel (I) ableiten,

**HOOC-[A]-COOH** (I)

in der A für eine lineare oder verzweigte, aliphatische, cycloaliphatische und/oder aromatische, gege-benenfalls hydroxysubstituierte Alkylengruppe mit 1 bis 52 und vorzugsweise 1 bis 10 Kohlenstoff-atomen steht. Typische Beispiele für Dicarbonsäuren, von denen sich die Polyaminoamide ableiten können sind beispielsweise Bemsteinsäure, Azelainsäure, Dodecandisäure, Phthalsäure und techni-sche Dimer- bzw. Trimerfettsäuren. Vorzugsweise handelt es sich um Polyaminoamide auf Basis von Adipinsäure. Die Polyamidoamine können sich femer von Polyaminen der Formel (II) ableiten,

**H**_{**2**}**N-(B)-NH-[(C)NH]**_{**z**}**H** (II)

in der B und C unabhängig voneinander für lineare oder verzweigte, gegebenenfalls hydroxysubstituierte Alkylengruppen mit 1 bis 4 Kohlenstoffatomen und z für 0 oder Zahlen von 1 bis 10 steht.

Typische Beispiele sind Polyamine der Formel **(II)**, in denen B und C für Ethylengruppen und z für 2 oder 3 steht. Demzufolge sind die bevorzugt einzusetzenden Polyamine Diethylentriamin und Triethylentetramin. In Summe bevorzugt sind Polyaminoamide auf Basis von Adipinsäure und Diethy-lentriamin.

Sofern kationische Polyamidoamine eingesetzt werden, kann deren **Quaternierung** in der Weise durchgeführt werden, wie sie von der Herstellung konventioneller kationischer Tenside bekannt ist. Als Quatemierungsmittel kommen beispielsweise Alkylhalogenide, wie beispielsweise Methylbromid, Butylchlorid und insbesondere Methylchlorid in Frage. Weiter können auch Dialkylverbindungen, wie z.B. Diethylsulfat, Dibutylsulfat, Dimethylphosphat, Diethylphophat, Dibutylphosphat und insbesondere Dimethylsulfat eingesetzt werden. Schließlich können als Quatemierungsmittel auch 2,3-Epoxypropyltrimethylammoniumchlorid, 3-Chlor- bzw. 3-Brom-2-hydroxypropyltrimethylammoniumchloride eingesetzt werden, die von der Degussa AG, Hanau/FRG unter der Bezeichnung QUAB® vertrieben werden. Zur Durchführung der Quatemierung werden die Polyamidoamine in wäßriger oder alkoholischer Lösung gelöst und bei Temperaturen im Bereich von 40 bis 70°C portionsweise mit dem Quatemierungsmittel versetzt. Die Reaktionszeit beträgt dabei üblicherweise 0,5 bis 3 h. Es hat sich als vorteilhaft erwiesen, die Menge des Quatemierungsmittels - 5 bis 30 und vorzugsweise 15 bis 25 Mol-% bezogen auf den für die Quaternierung zur Verfügung stehenden Stickstoff - auf die Aminzahl zu beziehen. Vorzugsweise wird die Quatemierung mit Dimethylsulfat oder einem QUAB-Reagenz durchgeführt. im Anschluß an die Quatemierung hat es sich weiterhin als vorteilhaft erwiesen, den pH-Wert des Zwischenproduktes durch Zugabe von wäßriger Alkalibase auf 9 bis 11 einzustellen.

Die **Vernetzung** der Polyaminoamide kann in wäßriger oder alkoholischer Lösung erfolgen. Dabei empfiehlt es sich, das Epichlorhydrin in beiden Stufen portionsweise zuzugeben und die Reaktion wegen der erheblichen Exothermie bei möglichst niedrigen Temperaturen nicht oberhalb von 40°C durchzuführen. Die Menge des einzusetzenden Epichlorhydrins entspricht üblicherweise der für eine Vemetzung zur Verfügung stehenden molaren Menge an Stickstoffgruppen. Es empfiehlt sich daher aus praktischen Gründen, vor der Vernetzung die Aminzahl des Polymers zu bestimmen. In einer bevorzugten Ausführungsform wird nach Zugabe des ersten Teils des Epichlorhydrins der pH-Wert des Reaktionsansatzes durch Zugabe von wäßriger Alkalibasen nachgeregelt und auf 9 bis 11 eingestellt. Im Anschluß an die Epichlorhydrinzugabe in der zweiten Verfahrensstufe wird das Produkt üblicherweise über einen Zeitraum von 12 bis 48 und vorzugsweise 24 bis 36 h gerührt. Gegen Ende der Reaktionszeit empfiehlt es sich femer, die Temperatur bis auf etwa 40°C anzuheben und die Vemetzung durch Zugabe von Mineralsäure und Einstellung eines pH-Wertes im Bereich von 2 bis 4 abzubrechen, sobald die Viskosität einen kritischen Bereich von etwa 500 mPas (gemessen nach der Brookfield-Methode, 40°C, Spindel 1) erreicht hat. Entsprechende Verfahren sind aus den beiden Druckschriften **DE 19517047 A1** und **DE 19604176 C1** (Henkel) bekannt.

### Ultrafiltration

Unter Ultrafiltration (UF) wird vom Fachmann ein Trennverfahren für Lösungen makromolekularer Stoffe verstanden, welches mit hydrostatischem Druck auf eine Membran arbeitet. Die UF ist daher von anderen Membranverfahren, wie z.B. der Umkehrosmose oder der Pervaporation zu unterscheiden. In diesem Zusammenhang sei beispielsweise auf das Europäische Patent **EP 0626881 B1** (Henkel) verwiesen, in dem die Abtrennung von anorganischen Salzen aus wäßrigen Tensidlösungen durch Ultrafiltration beschrieben wird. In einer bevorzugten Ausführungsform der Erfindung kann man die wäßrigen, vorzugsweise - bezogen auf Teststoffgehalt - 1 bis 20 und insbesondere 5 bis 15 Gew.-%igen Lösungen der vemetzten Kationpolymeren einer Ultrafiltration mit Membranen einer Porenweite zwischen 0,001 und 0,01 µm bei Drücken zwischen 1 und 20 vorzugsweise 5 bis 10 bar unterwerfen. Das eingesetzte Membranmaterial ist für das erfindungsgemäße Verfahren wenig kritisch und kann daher vom Fachmann frei gewählt werden. Typische Beispiele für geeignete Membranmaterialien sind daher Celluloseacetat, Fluorpolymere, Polysulfone, Polyethersulfone, Polyacrylate oder Zirkondioxid. Daneben sind auch Membranen aus Aluminiumoxid oder Kohlenstoff einsetzbar.

### Beispiele

**Vergleichsbeispiel V1.** In einer 1-I-Rührapparatur wurden 450 g eines Polyaminoamids auf Basis Adipinsäure und Diethylentriamin (Aminzahl 101 mg KOH/g entsprechend 0,81 Äquivalenten Stickstoff, Verkaufsprodukt der Henkel Corp., Gulph Mills/US) in 105 ml Wasser suspendiert und portionsweise mit 25 Mol-% - bezogen auf die Aminzahl - Epichlorhydrin versetzt, so daß die Temperatur nicht über 20°C abstieg. Anschließend wurde der Ansatz über einen Zeitraum von 4 h bei 17°C gerührt und schließlich durch Zugabe von wäßriger 25 Gew.-%iger Natriumhydroxidlösung auf einen pH-Wert von 9,5 eingestellt. Danach wurde die Reaktionsmischung mit weiteren 80 Mol-% Epichlorhydrin versetzt und zunächst 2 h bei 20°C und dann 21 h bei 30°C gerührt. Anschließend wurde die Mischung weiter gerührt, bis eine ausreichende Viskosität von etwa 500 mPas erreicht wurde. Schließlich wurde die Reaktion durch Zugabe von wäßriger Salzsäure und Einstellen auf einen pH-Wert von 2,5 abgebrochen. Das resultierende vemetzte Polymer wurde durch Zugabe von Wasser auf einen Trockenrückstand von 12,6 Gew.-% eingestellt; der AOX-Gehalt betrug 1393 ppm.

**Beispiel 1.** 10 kg des in Beispiel V1 hergestellten Produktes wurden mit Wasser 1:1 verdünnt und in die Membrantrennanalyse eingesetzt. Mittels einer Pumpe wurde diese Lösung bei einem Druck von 10 bar über eine Polysulfonmembran mit einem Cut-off von 5000 gefördert. Durch Entnahme von Permeat (Anfangsleistung 70 lm⁻²h⁻¹) wurde das Retentat bis auf ein Volumen von 10 l eingedickt. Anschließend wurde ein Diafiltration durchgeführt, d.h. es wurde unter Beibehaltung des Retentatvolumens soviel Wasser zugeführt, wie Permeat entnommen wurde. Nach einer Zugabe von 15 I Wasser wurde ein Produkt mit einem Trockenrückstand von 10 Gew.-% und einem AOX-Gehalt von 394 ppm erhalten.

**Anwendungstechnische Beispiele.** Für die anwendungstechnische Beurteilung wurde zunächst eine wäßrige Aufschlämmung von 1200 g Cellulosefasem (Gewichtsverhältnis kurze/lange Fasern = 70:30) in 6 I Wasser hergestellt. Jeweils 250 ml dieser Pasten wurden mit 5 Gew.-% der Testlösungen - bezogen auf Trockensubstanz - versetzt, 2 min gerührt und ausgestrichen. Das noch feuchte Rohpapier wurde schließlich über einen Zeitraum von 30 min bei 105°C getrocknet. Papierstreifen einer Breite von 15 mm (Gewicht der Muster ca. 2 g, Papiergewicht ca. 55 g/m²) wurden auf ihre Zugfestigkeit, d.h. die Kraft bis zum Reißen des Papiers als Mittel von 5 Messungen untersucht. Im Fall des nicht aufgereinigten Produktes (Beispiel V1) betrug die Reißfestigkeit 7,95 N, während im Fall des erfndungsgemäß hergestellten Polymers (Beispiel 1) eine Reißfestigkeit von 8,28 N erreicht wurde.

## Patentansprüche

1. Verfahren zur Herstellung von vemetzten Kationpolymeren mit vermindertem AOX-Gehalt, **dadurch gekennzeichnet, daß** man wäßrige Lösungen von epichlorhydrinvemetzten Polyamidoaminen einer Ultrafiltration unterwirft.

2. Verfahren nach Anspruch 1, **dadurch gekennzeichnet, daß** man Polymere einsetzt, die man erhält, indem man Polyaminoamide
(a) zunächst mit einer Menge von 5 bis 30 Mol-% - bezogen auf den zur Quaternierung zur Verfügung stehenden Stickstoff - eines Quaternierungsmittels umsetzt, und
(b) anschließend die resultierenden quatemierten Polyaminoamide mit einer dem Gehalt an nicht quatemiertem Stickstoff entsprechenden molaren Menge Epichlorhydrin vemetzt.

3. Verfahren nach Anspruch 1, **dadurch gekennzeichnet, daß** man Polymere einsetzt, die man erhält, indem man Polyaminoamide
(a) zunächst bei 10 bis 35°C mit einer Menge von 5 bis 40 Mol-% - bezogen auf den für die Ver-netzung zur Verfügung stehenden Stickstoff - Epichlorhydrin umsetzt, und
(b) das Zwischenprodukt auf einen pH-Wert im Bereich von 8 bis 11 einstellt und bei einer Tem-peratur im Bereich von 20 bis 45°C mit einer weiteren Menge Epichlorhydrin vemetzt, so daß das molare Einsatzverhältnis in Summe 90 bis 125 Mol-% - bezogen auf den für die Vernetzung zur Verfügung stehenden Stickstoff - beträgt.

4. Verfahren nach mindestens einem der Ansprüche 1 bis 3, **dadurch gekennzeichnet, daß** man Polymerlösungen mit einem Feststoffgehalt von 1 bis 20 Gew.-% einsetzt.

5. Verfahren nach mindestens einem der Ansprüche 1 bis 4, **dadurch gekennzeichnet, daß** man die Ultrafiltration bei einem Druck im Bereich von 1 bis 20 bar durchführt.

6. Verfahren nach mindestens einem der Ansprüche 1 bis 5, **dadurch gekennzeichnet, daß** man Membranen einer Porenweite zwischen 0,001 und 0,01 µm einsetzt.

7. Verfahren nach mindestens einem der Ansprüche 1 bis 6, **dadurch gekennzeichnet, daß** man Membranen aus Materialien einsetzt, die ausgewählt sind aus der Gruppe, die gebildet wird von Celluloseacetat, Fluorpolymere, Polysulfone, Polyethersulfone, Polyacrylate, Zirkondioxid, Aluminiumoxid und Kohlenstoff.

## Claims

1. A process for the production of crosslinked cationic polymers with a reduced AOX content, **characterized in that** aqueous solutions of epichlorohydrin-crosslinked polyamidoamines are subjected to ultrafiltration.

2. A process as claimed in claim 1, **characterized in that** polymers obtained by
(a) first reacting polyaminoamides with a quantity of 5 to 30 mol-%, based on the nitrogen available for quaternization, of a quatemizing agent and
(b) then crosslinking the resulting quaternized polyaminoamides with a molar quantity of epichlorohydrin corresponding to the content of non-quaternized nitrogen,
are used.

3. A process as claimed in claim 1, **characterized in that** polymers obtained by
(a) first reacting polyaminoamides at 10 to 35°C with a quantity of 5 to 40 mol-%, based on the nitrogen available for crosslinking, of epichlorohydrin and
(b) adjusting the intermediate product to a pH of 8 to 11 and crosslinking it with more epichlorohydrin at 20 to 45°C so that the molar ratio amounts in all to 90 to 125 mol-%, based on the nitrogen available for crosslinking
are used.

4. A process as claimed in at least one of claims 1 to 3, **characterized in that** polymer solutions with a solids content of 1 to 20% by weight are used.

5. A process as claimed in at least one of claims 1 to 4, **characterized in that** the ultrafiltration is carried out under a pressure of 1 to 20 bar.

6. A process as claimed in at least one of claims 1 to 5, **characterized in that** membranes with a pore diameter of 0.001 to 0.01 µm are used.

7. A process as claimed in at least one of claims 1 to 6, **characterized in that** membranes of materials selected from the group consisting of cellulose acetate, fluorine polymers, polysulfones, polyether sulfonates, polyacrylates, zirconium dioxide, aluminium oxide and carbon are used.

## Revendications

1. Procédé de production de polymères cationiques réticulés ayant une teneur diminuée en AOX,
**caractérisé en ce que**
des solutions aqueuses de polyaminoamides réticulés par l'épichlorhydrine sont soumis à une ultrafiltration.

2. Procédé selon la revendication 1,
**caractérisé en ce qu'**
on met en oeuvre des polymères qu'on obtient selon un procédé dans lequel
a) en premier lieu les polyaminoamides sont convertis avec une quantité de 5 à 30 % molaire - rapporté à l'azote mis à disposition pour la quaternisation - d'un agent de quaternisation, et
b) ensuite les polyaminoamides quatemisés obtenus sont réticulés avec une quantité molaire d'épichlorlydrine correspondant à la teneur en azote non quaternisé.

3. Procédé selon la revendication 1,
**caractérisé en ce qu'**
on met en oeuvre des polymères qu'on obtient **en ce que**
a) on fait réagir en premier lieu des polyaminoamides à 10 à 35°C avec une quantité de 5 à 40 % molaire - rapporté à l'azote disponible pour la réticulation - d'épichlorhydrine, et
b) on ajuste le produit intermédiaire à une valeur de pH dans la zone de 8 à 11 et on réticule à une température dans la zone de 20 à 45°C, avec une quantité supplémentaire d'épichlorhydrine de façon que le rapport d'utilisation molaire s'élève à globalement 90 à 125 % molaire - rapporté à l'azote disponible pour la réticulation.

4. Procédé selon au moins une des revendications 1 à 3,
**caractérisé en ce qu'**
on met en oeuvre des solutions de polymère ayant une teneur en matières solides de 1 à 20 % en poids.

5. Procédé selon au moins une des revendications 1 à 4,
**caractérisé que ce qu'**
on effectue l'ultrafiltration à une pression dans la zone de 1 à 20 bars.

6. Procédé selon au moins une des revendications 1 à 5,
**caractérisé en ce qu'**
on utilise des membranes ayant une largeur de pores comprise entre 0,0001 et 0,01 µm.

7. Procédé selon au moins une des revendications 1 à 6,
**caractérisé en ce qu'**
on utilise des membranes en matériaux qui sont choisis dans le groupe formé de l'acétate de cellulose, de polymères fluorés, de polysulfones, de polyéthers sulfonés, de polyacrylates, de dioxyde de zirconium, d'oxyde d'aluminium et de carbone.
